# EUROPÄISCHE PATENTSCHRIFT

(11) **EP 3 523 529 B1**
(45) Veröffentlichungstag und Bekanntmachung des Hinweises auf die Patenterteilung: **07.10.2020**
(21) Anmeldenummer: 17751739.8
(22) Anmeldetag: 10.08.2017
(51) Int. Cl.: F02D 41/00, F02D 41/24, F02D 41/28, F02D 41/14, F02D 13/02, F01L 13/00, F02D 13/00

(54) **VERFAHREN ZUR KOMBINIERTEN IDENTIFIZIERUNG VON PHASENDIFFERENZEN DES EINLASSVENTILHUBS UND DES AUSLASSVENTILHUBS EINES VERBRENNUNGSMOTORS MITTELS LINIEN GLEICHER PHASENLAGEN UND AMPLITUDEN**
METHOD FOR THE COMBINED IDENTIFICATION OF THE PHASE DIFFERENCES OF THE INLET VALVE STROKE AND THE OUTLET VALVE STROKE OF AN INTERNAL COMBUSTION ENGINE WITH THE AID OF LINES OF EQUAL PHASE POSITION AND AMPLITUDE
PROCÉDÉ D'IDENTIFICATION COMBINÉE DE DÉCALAGES DE PHASE DE LA LEVÉE DES SOUPAPES D'ADMISSION ET DE LA LEVÉE DES SOUPAPES D'ÉCHAPPEMENT D'UN MOTEUR À COMBUSTION INTERNE À L'AIDE DE LIGNES DE MÊMES POSITIONS DE PHASE ET AMPLITUDES

(30) Priorität: 10.10.2016 DE 102016219584
(43) Veröffentlichungstag der Anmeldung: 14.08.2019
(73) Patentinhaber: Vitesco Technologies GmbH, 30165 Hannover (DE)
(72) Erfinder: BRAUN, Tobias, 93152 Undorf (DE)
(74) Vertreter: Waldmann, Georg Alexander
(86) Internationale Anmeldenummer: PCT/EP2017/070339
(87) Internationale Veröffentlichungsnummer: WO 2018/068923

(56) Entgegenhaltungen:
- WO-A1-96/32579
- DE-A1-102015 209 665
- DE-B3-102012 212 860

## Beschreibung

Die vorliegende Erfindung betrifft ein Verfahren mit dem Phasendifferenzen des Ventilhubs der Einlassventile und der Auslassventile eines Hubkolben-Verbrennungsmotors im Betrieb kombiniert identifiziert werden können durch Auswertung von im Luft-Ansaugtrakt gemessenen dynamischen Druckschwingungen der Ansaugluft.

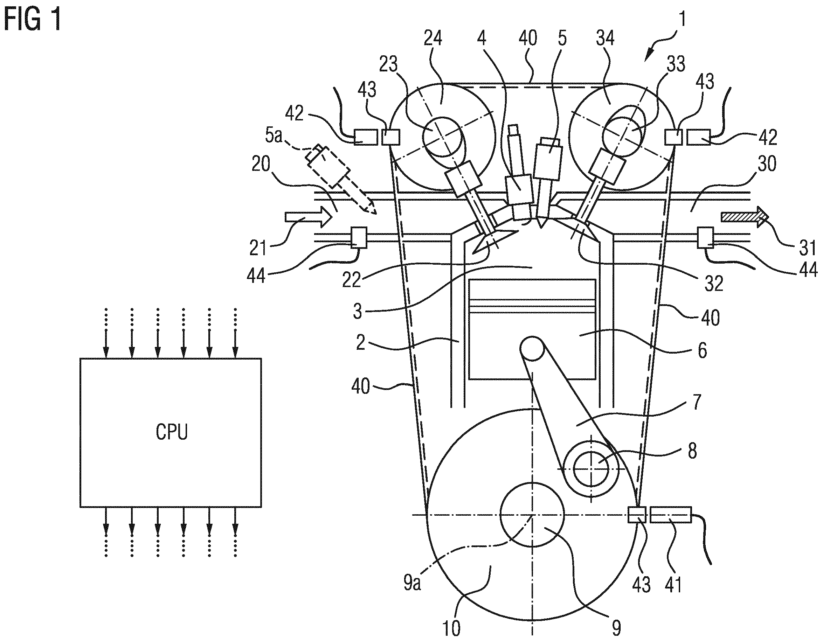

Hubkolben-Verbrennungsmotoren, die im Folgenden verkürzt auch nur als Verbrennungsmotoren bezeichnet werden, weisen ein oder mehrere Zylinder auf in denen jeweils ein Hubkolben angeordnet ist. Zur Veranschaulichung des Prinzips eines Hubkolben-Verbrennungsmotors wird im Folgenden Bezug auf Figur 1 genommen, die beispielhaft einen Zylinder eines ggf. auch mehrzylindrigen Verbennungsmotors mit den wichtigsten Funktionseinheiten darstellt.
Der jeweilige Hubkolben 6 ist linear beweglich im jeweiligen Zylinder 2 angeordnet und schließt mit dem Zylinder 2 einen Brennraum 3 ein. Der jeweilige Hubkolben 6 ist über ein sogenanntes Pleuel 7 mit einem jeweiligen Hubzapfen 8 einer Kurbelwelle 9 verbunden, wobei der Hubzapfen 8 exzentrisch zur Kurbelwellendrehachse 9a angeordnet ist. Durch die Verbrennung eines Kraftstoff-Luft-Gemisches im Brennraum 3 wird der Hubkolben 6 linear "abwärts" angetrieben. Die translatorische Hubbewegung des Hubkolbens 6 wird mittels Pleuel 7 und Hubzapfen 8 auf die Kurbelwelle 9 übertragen und in eine Rotationsbewegung der Kurbelwelle 9 umgesetzt, die den Hubkolben 6 nach Überwindung eines unteren Totpunktes im Zylinder 2 wieder in Gegenrichtung "aufwärts" bis zu einem oberen Totpunkt bewegt. Um einen kontinuierlichen Betrieb des Verbrennungsmotors 1 zu ermöglichen muss während eines sogenannten Arbeitsspiels eines Zylinders 2 zunächst der Brennraum 3 mit dem Kraftstoff-Luft-Gemisch befüllt, das Kraftstoff-Luft-Gemisch im Brennraum 3 verdichtet, dann gezündet und zum Antrieb des Hubkolbens 6 expandierend verbrannt werden und schließlich das nach der Verbrennung verbleibende Abgas aus dem Brennraum 3 ausgeschoben werden. Durch kontinuierliche Wiederholung dieses Ablaufs ergibt sich ein kontinuierlicher Betrieb des Verbrennungsmotors 1 unter Abgabe einer zur Verbrennungsenergie proportionalen Arbeit.

Je nach Motorkonzept ist ein Arbeitsspiel des Zylinders 2 in zwei über eine Kurbelwellenumdrehung (360°) verteilte Takte (Zweitaktmotor) oder in vier über zwei Kurbelwellenumdrehungen (720°) verteilte Takte (Viertaktmotor) gegliedert.

Als Antrieb für Kraftfahrzeuge hat sich bis heute der Viertaktmotor durchgesetzt. In einem Ansaugtakt wird, bei Abwärtsbewegung des Hubkolbens 6, Kraftstoff-Luft-Gemisch oder auch nur Frischluft (bei Kraftstoff-Direkteinspritzung) aus dem Luft-Ansaugtrakt 20 in den Brennraum 3 eingebracht. Im folgenden Verdichtungstakt wird, bei Aufwärtsbewegung des Hubkolbens 6, das Kraftstoff-Luft-Gemisch oder die Frischluft im Brennraum 3 verdichtet sowie ggf. separat Kraftstoff mittels eines, zu einem Kraftstoff-Zuführsystem gehörenden, Einspritzventils 5 direkt in den Brennraum 3 eingespritzt. Im folgenden Arbeitstakt wird das Kraftstoff-Luft-Gemisch mittels einer Zündkerze 4 gezündet, expandierend verbrannt und bei Abwärtsbewegung des Hubkolbens 6 unter Abgabe von Arbeit entspannt. Schließlich wird in einem Ausschiebetakt, bei erneuter Aufwärtsbewegung des Hubkolbens 6, das verbleibende Abgas aus dem Brennraum 3 in den Abgas-Auslasstrakt 30 ausgeschoben.

Die Abgrenzung des Brennraumes 3 zum Luft-Ansaugtrakt 20 oder Abgas-Auslasstrakt 30 des Verbrennungsmotors erfolgt in der Regel und insbesondere bei dem hier zugrungegelegten Beispiel über Einlassventile 22 und Auslassventile 32. Die Ansteuerung dieser Ventile erfolgt nach heutigem Stand der Technik über mindestens eine Nockenwelle. Das gezeigte Beispiel verfügt über eine Einlassnockenwelle 23 zur Betätigung der Einlassventile 22 und über eine Auslassnockenwelle 33 zur Betätigung der Auslassventile 32. Zwischen den Ventilen und der jeweiligen Nockenwelle sind zumeist noch weitere, hier nicht dargestellte, mechanische Bauteile zur Kraftübertragung vorhanden, die auch einen Ventilspielausgleich beinhalten können (z.B. Tassenstößel, Kipphebel, Schlepphebel, Stößelstange, Hydrostößel etc.).

Der Antrieb der Einlassnockenwelle 23 und der Auslassnockenwelle 33 erfolgt über den Verbrennungsmotor 1 selbst. Hierzu werden die Einlassnockenwelle 23 und die Auslassnockenwelle 33 jeweils über geeignete Einlassnockenwellen-Steueradapter 24 und Auslassnockenwellen-Steueradapter 34, wie zum Beispiel Zahnräder, Kettenräder oder Riemenräder mithilfe eines Steuergetriebes 40, das zum Beispiel ein Zahnradgetriebe, eine Steuerkette oder einen Steuerzahnriemen aufweist, in vorgegebener Lage zueinander und zur Kurbelwelle 9 über einen entsprechenden Kurbelwellen-Steueradapter 10, der entsprechend als Zahnrad, Kettenrad oder Riemenrad ausgebildet ist, mit der Kurbelwelle 9 gekoppelt. Durch diese Verbindung ist die Drehlage der Einlassnockenwelle 23 und der Auslassnockenwelle 33 in Relation zur Drehlage der Kurbelwelle 9 prinzipiell definiert. In Figur 1 ist beispielhaft die Kopplung zwischen Einlassnockenwelle 23 und der Auslassnockenwelle 33 und der Kurbelwelle 9 mittels Riemenscheiben und Steuerzahnriemen dargestellt.

Der über ein Arbeitsspiel zurückgelegte Drehwinkel der Kurbelwelle wird im Weiteren als Arbeitsphase oder einfach nur Phase bezeichnet. Ein innerhalb einer Arbeitsphase zurückgelegter Drehwinkel der Kurbelwelle wird dem entsprechend als Phasenwinkel bezeichnet. Der jeweils aktuelle Kurbelwellen-Phasenwinkel der Kurbelwelle 9 kann mittels eines mit der Kurbelwelle 9 oder dem Kurbelwellen-Steueradapter 10 verbundenen Lagegebers 43 und einem zugeordneten Kurbelwellen-Lagesensor 41 laufend erfasst werden. Dabei kann der Lagegeber zum Beispiel als Zähnerad mit einer Mehrzahl von äquidistant über den Umfang verteilt angeordneten Zähnen ausgeführt sein, wobei die Anzahl der einzelnen Zähne die Auflösung des Kurbelwellen-Phasenwinkelsignals bestimmt.

Ebenso können ggf. zusätzlich die aktuellen Phasenwinkel der Einlassnockenwelle 23 und der Auslassnockenwelle 33 mittels entsprechender Lagegeber 43 und zugeordneter Nockenwellenlagesensoren 42 laufend erfasst werden.

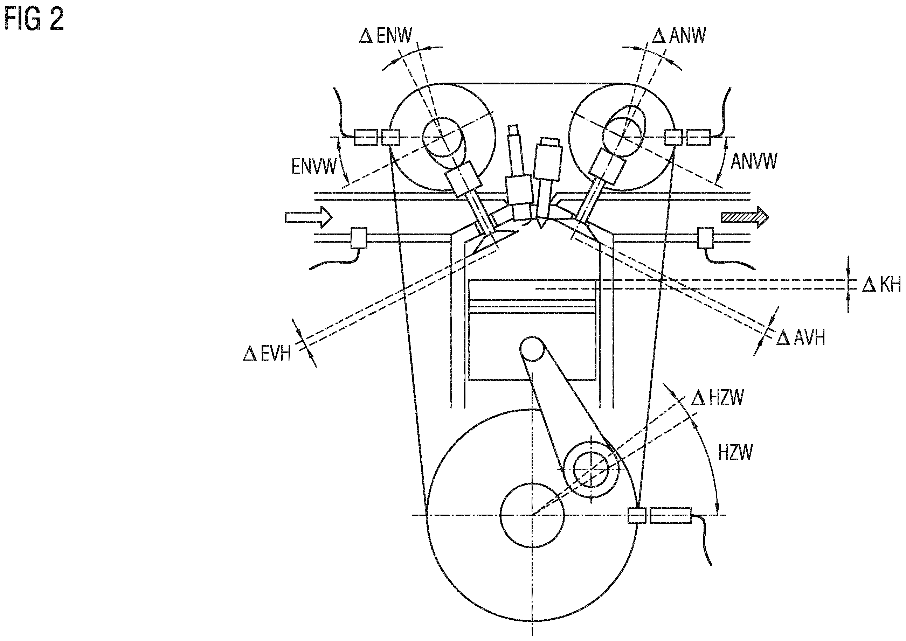

Da sich der jeweilige Hubzapfen 8 und mit ihm der Hubkolben 6, die Einlassnockenwelle 23 und mit ihr das jeweilige Einlassventil 22 sowie die Auslassnockenwelle 33 und mit ihr das jeweilige Auslassventil 32 durch die vorgegebene mechanische Kopplung in vorgegebener Relation zueinander und in Abhängigkeit von der Kurbelwellendrehung bewegen, durchlaufen diese Funktionskomponenten synchron zur Kurbelwelle die jeweilige Arbeitsphase. Die jeweiligen Drehlagen und Hubpositionen von Hubkolben 6, Einlassventilen 22 und Auslassventilen 32 können so, unter Berücksichtigung der jeweiligen Übersetzungsverhältnisse, auf den durch den Kurbelwellen-Lagesensor 41 vorgegebenen Kurbelwellen-Phasenwinkel der Kurbelwelle 9 bezogen werden. Bei einem idealen Verbrennungsmotor ist somit jedem bestimmten Kurbelwellen-Phasenwinkel ein bestimmter Hubzapfenwinkel HZW (Figur 2), ein bestimmter Kolbenhub, ein bestimmter Einlassnockenwellenwinkel und somit ein bestimmter Einlassventilhub sowie ein bestimmter Auslassnockenwellenwinkel und somit ein bestimmter Auslassventilhub zuordenbar. Das heißt alle genannten Komponenten befinden sich bzw. bewegen sich in Phase mit der sich drehenden Kurbelwelle 9.

Bei modernen Verbrennungsmotoren 1 können innerhalb der mechanischen Koppelstrecke zwischen Kurbelwelle 9 und Einlassnockenwelle 23 sowie der Auslassnockenwelle 33 jedoch zusätzliche Stellglieder vorhanden sein, zum Beispiel integriert in den Einlassnockenwellenadapter 24 und den Auslassnockenwellenadapter 34, die einen gewünschten steuerbaren Phasenversatz zwischen der Kurbelwelle 9 und Einlassnockenwelle 23 sowie der Auslassnockenwelle 33 bewirken. Diese sind als sogenannte Phasensteller bei sogenannten variablen Ventiltrieben bekannt.

Symbolisch ist auch ein elektronisches, programmierbares Motorsteuergerät 50 (CPU) dargestellt, das mit Signal-Eingängen zur Entgegennahme der vielfältigen Sensorsignale und mit Signal- und Leistungs-Ausgängen zur Ansteuerung entsprechender Stelleinheiten und Aktuatoren zur Steuerung der Motorfunktionen ausgestattet ist.

Für einen optimalen Betrieb des Verbrennungsmotors (bezüglich Emissionen, Verbrauch, Leistung, Laufruhe etc.) sollte die während des Ansaugtaktes in den Brennraum eingebrachte Frischgasladung bestmöglich bekannt sein, um die weiteren Parameter für die Verbrennung, wie zum Beispiel die zuzuführende, ggf. direkt eingespritzte Kraftstoffmenge darauf abstimmen zu können. Der sogenannte Ladungswechsel, also das Ansaugen von Frischgas und das Ausschieben des Abgases ist dabei in großem Maße abhängig von den Steuerzeiten der Einlassventile 22 und Auslassventile 32, also vom zeitlichen Verlauf der jeweiligen Ventilhübe in Bezug auf den zeitlichen Verlauf des Kolbenhubs. In anderen Worten ist der Ladungswechsel im Betrieb abhängig von den Phasenlagen der Ein- und Auslassventile in Relation zum Kurbelwellen-Phasenwinkel und somit zur Phasenlage des Hubkolbens.

Stand der Technik zur Ermittlung der Frischgasladung und zur Abstimmung der Steuerparameter des Verbrennungsmotors darauf, ist die Vermessung eines sogenannten Referenz-Verbrennungsmotors in allen auftretenden Betriebszuständen, zum Beispiel in Abhängigkeit von der Drehzahl, der Last, ggf. der durch Phasensteller vorgebbaren Ventilsteuerzeiten, ggf. den Betriebsparametern von Abgasturbolader oder Kompressor, etc. und die Speicherung von diesen Messwerten oder Derivaten davon oder von das Verhalten wiedergebenden Modellansätzen auf dem Motorsteuergerät eines entsprechenden Serien-Verbrennungsmotors. Alle baugleichen, in Serie produzierten Verbrennungsmotoren der gleichen Baureihe werden dann mit diesem erzeugten Referenz-datensatz betrieben.

Eine, zum Beispiel durch Fertigungstoleranzen verursachte, Abweichung der tatsächlichen Relativpositionen zwischen Einlass- und Auslassventilen und dem Kurbelwellen-Phasenwinkel bzw. der Hubkolbenposition eines Serien-Verbrennungsmotors in Bezug auf die idealen Referenzpositionen des Referenz-Verbrennungsmotors, also eine Phasendifferenz des Einlassventilhubs, des Auslassventilhubs und gegebenenfalls des Kolbenhubs in Bezug auf den durch den Kurbelwellen-Lagesensor vorgegebenen Kurbelwellen-Phasenwinkel bzw. die Phasenlage der Kurbelwelle führt dazu, dass die tatsächlich angesaugte Frischgasladung von der als Referenz bestimmten Frischgasladung abweicht und somit die auf dem Referenz-Datensatz basierenden Steuerparameter nicht optimal sind. Beim Betrieb des Verbrennungsmotors können sich durch diese Fehler negative Auswirkungen bezüglich Emissionen, Verbrauch, Leistung, Laufruhe etc. ergeben.

Zur Veranschaulichung der an einem Serien-Verbrennungsmotor auftretenden möglichen Abweichungen und zur Definition der Benennung dieser Abweichungen im Weiteren wird Bezug genommen auf Figur 2, die den Verbrennungsmotor aus Figur 1 zeigt, in der jedoch, zur besseren Übersichtlichkeit die in Figur 1 dargestellten Bezugszeichen weggelassen sind und nur die entsprechenden Abweichungen bezeichnet sind.

Ausgehend von einer Referenzposition des an dem Kurbelwellen-Steueradapter 10 angeordneten Lagegeber 43, dessen Phasenwinkel von dem Kurbelwellen-Lagesensor 41 erfasst wird, ergeben sich mehrere Toleranzketten, die zu Abweichungen der Phasenlagen, im Folgenden auch als Phasendifferenzen bezeichnet, von Hubkolben 6, Einlassventilen 22 und Auslassventilen 32 gegenüber den idealen Referenz-Phasenlagen führen.

Dabei ergibt sich die Kolbenhub-Phasendifferenz ΔKH zum Beispiel aus einer Abweichung des Hubzapfenwinkels HZW, der sogenannten Hubzapfen-Winkeldifferenz ΔHZW, in Relation zur Referenzposition des Kurbelwellen-Lagesensors 41, und aus verschiedenen Maßtoleranzen (nicht dargestellt) von Pleuel 7 und Hubkolben 6.

Weiterhin ergibt sich die Einlassventilhub-Phasendifferenz ΔEVH zum Beispiel aus einer Abweichung der Nockenposition, der sogenannten Einlassnockenwellen-Winkeldifferenz ΔENW zusammen mit mechanischen Toleranzen (nicht dargestellt) des Einlassnockenwellen-Steueradapters 24 und des Steuergetriebes 40. Sofern ein Phasenversteller für die Einlassnockenwelle vorhanden ist, kommt ggf. noch ein Einlassnockenwellen-Verstellwinkel ENVW bzw. eine Abweichung dessen von der Vorgabe in Betracht.

In gleicher Weise ergibt sich die Auslassventilhub-Phasendifferenz ΔAVH zum Beispiel aus einer Abweichung der Nockenposition, der sogenannten Auslassnockenwellen-Winkeldifferenz ΔANW zusammen mit mechanischen Toleranzen (nicht dargestellt) des Auslassnockenwellen-Steueradapters 24 und des Steuergetriebes 40. Sofern ein Phasenversteller für die Auslassnockenwelle vorhanden ist, kommt ggf. noch ein Auslassnockenwellen-Verstellwinkel ANVW bzw. eine Abweichung dessen von der Vorgabe in Betracht.

Mögliche Ursachen für die beschriebenen Abweichungen können z.B. sein:
- Fertigungs- und/oder Montagetoleranzen der beteiligten mechanischen Komponenten, sowie
- Verschleißerscheinungen, wie z. B. eine Längung der Steuerkette oder des Zahnriemens, über die die Kurbelwelle und die Nockenwellen gekoppelt sind sowie
- Verformungserscheinungen elastisch oder plastisch durch hohe mechanische Belastungszustände.

Die bisherige Lösung des beschriebenen Problems, gemäß dem aktuellen Stand der Technik, liegt dabei prinzipiell in der Erfassung und in der Quantifizierung der auftretenden Abweichungen zwischen Referenz-Verbrennungsmotor und Serien-Verbrennungsmotor, um entsprechende Maßnahmen zur Korrektur oder Kompensation mittels Anpassung von Steuerungsparametern durchführen zu können.

Weiterhin wurde bisher versucht diesem Problem zu begegnen durch Minimierung von Fertigungs- und Montagetoleranzen. Ferner werden zum Beispiel die Steuerzeiten anhand Ventilhubstellung, Nockenkontur etc. am jeweiligen stehenden Serien-Verbrennungsmotor vermessen und der Verbrennungsmotor beim Zusammenbau entsprechend justiert.
Weiterhin arbeiten die meisten derzeit bekannten Systeme mit einem Bezugspunktsystem (Positions-Feedback). Hierbei wird an der Kurbelwelle sowie der Einlassnockenwelle und/oder der Auslassnockenwelle oder auch an dem jeweiligen Kurbelwellen-Steueradapter sowie dem Einlassnockenwellen-Steueradapter und/oder dem Auslassnockenwellen-Steueradapter oder auch an einem ggf. vorhandenen Phasensteller etc. jeweils eine Positionsmarke gesetzt, welche mit einem Sensor erfasst werden kann. Dadurch kann die relative Phasenlage zwischen der Kurbelwelle und der jeweiligen Einlassnockenwelle und/oder Auslassnockenwelle ermittelt und Abweichungen zu den angestrebten Referenzwerten identifiziert werden. Den unerwünschten Auswirkungen dieser Abweichungen kann dann durch eine Adaption oder Korrektur entsprechender Steuerparameter, in Abhängigkeit von den ermittelten Abweichungen, im Steuergerät entgegengewirkt werden.

Prinzipbedingt kann mit diesem Verfahren jedoch nur ein Teil der auftretenden Toleranzen erkannt werden. Beispielsweise ist es so nicht möglich, eine Winkelabweichung aufgrund einer Positionsabweichung der jeweiligen Positionsmarken selbst in Bezug auf die Nockenwellen oder eine Einlassnockenwellen-Winkeldifferenz ΔENW bzw. eine Auslassnockenwellen-Winkeldifferenz ΔANW in Bezug auf die jeweilige Referenzposition zu erkennen.

Weitere Verfahren, wie Auswertung des Klopfsensorsignals, Auswertung des Zylinderdrucksignals, sind ebenfalls bekannt.

Weiterhin ist aus der US 6,804,997 B1 eine Motorsteuervorrichtung zur Bestimmung der Phasenlage der Kurbelwelle durch Überwachung und Auswertung von Druckschwankungen der Ansaugluft im Luft-Ansaugtrakt bekannt. Die Steuervorrichtung ist so ausgebildet, dass sie Ansaugluftdruckschwankungen bestimmt, die ein Ansaugluftereignis und somit eine damit in Relation stehende Kurbelwellenphasenlage sowie deren entsprechende Periode des Motorzyklus anzeigen. Die Steuervorrichtung benutzt diese Informationen, um die Kurbelwellendrehzahl und die Phasenlage der Kurbelwelle zu ermitteln, um die Kraftstoffeinspritzung und das Zündverhalten des Motors zu steuern. Die Steuerzeiten der Einlass- und Auslassventile also ggf. Einlassventilhub-Phasendifferenzen und Auslassventilhub-Phasendifferenzen werden dabei nicht berücksichtigt und können das Ergebnis unter Umständen erheblich beeinflussen.

Aus dem Dokument DE 10 2005 007 057 ist ein Regelungsverfahren für einen zu regelnden Drosselklappen-Luftstrom im Ansaugtrakt eines Verbrennungsmotors offenbart, wobei Druckpulsationen der Ansaugluft im Luft-Ansaugtrakt, die unter Anderem auch von den Ventilsteuerzeiten des Verbrennungsmotors beeinflusst sind, bei der Regelung des Fluidstromes berücksichtigt werden. Dazu werden die Druckpulsationen mittels Fast-Fourier-Transformation analysiert und die Amplitudeninformation in einem Klirrfaktor zusammengefasst, der als eine zusätzliche Eingangsgröße zum Beispiel für ein mehrdimensionales mathematisches Regelungsmodell des Drosselklappen-Luftstromes herangezogen wird. Konkrete Rückschlüsse auf die Ventilsteuerzeiten, also auch ggf. vorhandene Einlassventilhub-Phasendifferenzen und Auslassventilhub-Phasendifferenzen des Verbrennungsmotors können mittels dieses Verfahrens nicht gezogen werden.

Aus Dokument DE 35 06 114 A1 ist ein Verfahren zur Steuerung oder Regelung einer Brennkraftmaschine bei der in Abhängigkeit von einer Betriebsgröße, die wenigstens einen Teil eines Schwingungsspektrums der Brennkraftmaschine als Information enthält, wie zum Beispiel Gasdrucksignalen, wenigstens eine Stellgröße der Brennkraftmaschine gesteuert wird. Dazu wird aus der erfassten Betriebsgröße durch diskrete Fourier-Transformation das in ihr enthaltene Betrags-Spektrum als Teil des Schwingungsspektrums ermittelt und als Mess-Spektrum herangezogen und mit einem Bezugsspektrum verglichen. Die zu steuernde Stellgröße der Brennkraftmaschine wird dann in Abhängigkeit von der Abweichung zwischen Mess-Spektrum und Bezugsspektrum gesteuert. Ein konkreter Rückschluss auf die Ventilsteuerzeiten und Kolbenhubposition des Verbrennungsmotors kann auch mit Hilfe dieses Verfahrens nicht einfach gezogen werden.

Dokument US 2009 0 312 932 A1 offenbart ein Verfahren zum Diagnostizieren der Verbrennung innerhalb eines Verbrennungsmotors, wobei aus der Kurbelwellen-Winkelgeschwindigkeit mittels einer Fast-Fourier-Transformation ein Verbrennungsphaseneinstellungswert erzeugt wird, dieser Wert mit einem erwarteten Verbrennungsphaseneinstellungswert verglichen wird und Differenzen dieser Werte identifiziert werden, die größer als eine zulässige Verbrennungsphaseneinstellungsdifferenz sind.

Eine ähnliche Vorgehensweise zur Ermittlung von Abweichungen zwischen Referenzmotor und Serienmotor wie zuvor beschrieben ist auch in Dokument US 2010 0 063 775 A1 offenbart.

Der vorliegenden Erfindung liegt die Aufgabe zugrunde, ein einfaches und kostengünstiges Verfahren der eingangs beschriebenen Art zur Verfügung zu stellen, mittels dem eine besonders genaue Identifizierung der tatsächlichen Phasenlagen der Einlassventile und der Auslassventile möglich ist, bzw. die Einlassventilhub-Phasendifferenz ΔEVH sowie die Auslassventilhub-Phasendifferenz ΔAVH im laufenden Betrieb des Verbrennungsmotors zuverlässig bestimmt werden kann.

Diese Aufgabe wird erfindungsgemäß durch ein Verfahren zur kombinierten Identifizierung einer Einlassventilhub-Phasendifferenz und einer Auslassventilhub-Phasendifferenz eines Zylinders eines Serien Verbrennungsmotors im Betrieb gemäß dem Hauptanspruch gelöst.

Ausführungsbeispiele und Weiterbildungen des erfindungsgemäßen Gegenstandes sind Gegenstand der Unteransprüche.

Gemäß dem erfindungsgemäßen Verfahren zur kombinierten Identifizierung einer Einlassventilhub-Phasendifferenz und einer Auslassventilhub-Phasendifferenz eines Zylinders eines Serien Verbrennungsmotors im Betrieb werden dem jeweiligen Zylinder zuordenbare dynamische Druckschwingungen im Luft-Ansaugtrakt des betreffenden Serien-Verbrennungsmotors im Betrieb gemessen und daraus ein entsprechendes Druckschwingungssignal erzeugt. Gleichzeitig wird ein Kurbelwellen-Phasenwinkelsignal ermittelt. Aus dem Druckschwingungssignal werden mit Hilfe Diskreter-Fourier-Transformation die Phasenlage und die Amplitude zumindest einer ausgesuchten Signalfrequenzen der gemessenen Druckschwingungen in Bezug auf das Kurbelwellen-Phasenwinkelsignal ermittelt.
Darüber hinaus zeichnet sich das Verfahren durch die folgenden weiteren Schritte aus:
- Auf Basis der ermittelten Phasenlage und Amplitude der jeweiligen ausgesuchten Signalfrequenz, werden in Abhängigkeit von Einlassventilhub-Phasendifferenz und Auslassventilhub-Phasendifferenz stehende Linien gleicher Phasenlage und gleicher Amplitude der jeweils gleichen Signalfrequenz ermittelt. Dies erfolgt mit Hilfe von in Referenzlinien-Kennfeldern gespeicherten oder mittels einer jeweiligen algebraischen Modell-Funktion ermittelten Referenzlinien der gleichen Phasenlage und der gleichen Amplitude der jeweiligen Signalfrequenz.
- Ein jeweils gemeinsamer Schnittpunkt der ermittelten Linien gleicher Phasenlagen und der ermittelten Linie gleicher Amplitude der jeweiligen Signalfrequenz wird ermittelt durch Projektion in eine gemeinsame, durch Einlassventilhub-Phasendifferenz und Auslassventilhub-Phasendifferenz aufgespannte Ebene.
- Die Einlassventilhub-Phasendifferenz und die Auslassventilhub-Phasendifferenz wird bestimmt aus dem ermittelten gemeinsamen Schnittpunkt der Linie gleicher Phasenlagen und der Linie gleicher Amplitude der jeweiligen Signalfrequenz.

Unter dem Begriff "Luft-Ansaugtrakt" oder auch einfach "Ansaugtrakt", "Ansaugsystem" oder "Einlasstrakt" eines Verbrennungsmotors fasst der Fachmann dabei alle Komponenten, die der Luftzuführung zu den jeweiligen Brennräumen der Zylinder dienen und somit den sogenannten Luftpfad definieren zusammen. Dazu können zum Beispiel ein Luftfilter, ein Ansaugrohr, Ansaugkrümmer oder Verteilerrohr oder kurz Saugrohr, ein Drosselklappenventil, sowie ggf. ein Verdichter und die Ansaugöffnung im Zylinder bzw. der Einlasskanal des Zylinders gehören.

Zur Analyse des Druckschwingungssignals, wird dieses einer Diskreten Fourier-Transformation (DFT) unterzogen. Dazu kann ein als Fast Fourier-Transformation (FFT) bekannter Algorithmus zur effizienten Berechnung der DFT herangezogen werden. Mittels DFT wird nun das Druckschwingungssignal in einzelne Signalfrequenzen zerlegt, die im Weiteren separat vereinfacht bezüglich ihrer Amplitude und der Phasenlage analysiert werden können.

Im vorliegenden Fall hat sich gezeigt, dass sowohl die Phasenlage als auch die Amplitude ausgesuchter Signalfrequenzen des Druckschwingungssignals in Abhängigkeit stehen zu den Ventilsteuerzeiten, also zu den Phasenverläufen des Einlassventilhubs und des Auslassventilhubs des Verbrennungsmotors. Die Phasenlage einer Signalfrequenz kennzeichnet dabei die relative Position des Signalfrequenzsignals in Bezug auf das Kurbelwellen-Drehwinkelsignal, die Amplitude ist ein Maß für die Ausschlaghöhe des Signalfrequenzsignals in Bezug auf eine Mittellinie.
Dabei ist es unerheblich ob zur Ermittlung der jeweiligen Linie gleicher Phasenlage und zur Ermittlung der jeweiligen Linie gleicher Amplitude die gleiche Signalfrequenz oder unterschiedliche Signalfrequenzen herangezogen werden. Zur Ermittlung eines jeweiligen Schnittpunktes kann entsprechend jeweils eine Linie gleicher Phasenlage und eine Linie gleicher Amplitude der gleichen Signalfrequenz oder unterschiedlicher Signalfrequenzen, also zum Beispiel die Linie gleicher Phasenlage einer ersten Signalfrequenz und die Linie gleicher Amplitude einer weiteren Signalfrequenz, herangezogen werden.

Das erfindungsgemäße Verfahren hat den Vorteil, dass ohne zusätzliche Sensorik die Phasenlagen und Amplituden und somit die aktuellen Hubpositionen der Einlassventile und der Auslassventile des Verbrennungsmotors in Relation zum Kurbelwellen-Phasenwinkel mit hoher Genauigkeit ermittelt werden können und so zur genauen Berechnung des Ladungswechselvorgangs und zur Abstimmung der Steuerungsparameter des Verbrennungsmotors herangezogen werden können.

Eine Weiterbildung des vorausgehend beschriebenen Verfahrens ist dadurch gekennzeichnet, dass die Phasenlagen und die Amplituden mehrerer ausgesuchter Signalfrequenzen ermittelt werden und dass auf Basis der ermittelten Phasenlagen und Amplituden der jeweiligen ausgesuchten Signalfrequenzen, die jeweiligen Linien gleicher Phasenlage und gleicher Amplitude dieser ausgesuchten Signalfrequenzen ermittelt werden. Es können dann mehrere gemeinsame Schnittpunkte jeweils einer ermittelten Linie gleicher Phasenlage und einer ermittelten Linie gleicher Amplitude der ausgesuchten Signalfrequenzen ermittelt werden. Die Einlassventilhub-Phasendifferenz und die Auslassventilhub-Phasendifferenz werden dann aus den mehreren Schnittpunkten durch Mittelwertbildung ermittelt. Dabei ist es auch hierbei unerheblich ob zur Ermittlung eines jeweiligen Schnittpunktes jeweils eine Linie gleicher Phasenlage und eine Linie gleicher Amplitude der gleichen Signalfrequenz oder unterschiedlicher Signalfrequenzen, also zum Beispiel die Linie gleicher Phasenlage einer ersten Signalfrequenz und die Linie gleicher Amplitude einer weiteren Signalfrequenz, herangezogen werden. Dies erhöht die Genauigkeit des Verfahrens weiter und somit die, Genauigkeit der ermittelten Einlassventilhub-Phasendifferenz und der ermittelten Auslassventilhub-Phasendifferenz.

In einer Ausführung des Verfahrens umfasst dieses die dem oben beschriebenen erfindungsgemäßen Verfahren vorausgehenden Schritte der Vermessung eines Referenz-Verbrennungsmotors zur Bestimmung von Referenzlinien gleicher Phasenlagen und gleicher Amplituden ausgesuchter Signalfrequenzen des Druckschwingungssignals im Luft-Ansaugtrakt in Abhängigkeit von Referenz-Einlassventilhub-Phasendifferenz und Referenz-Auslassventilhub-Phasendifferenz und der Speicherung der Referenzlinien gleicher Phasenlagen und gleicher Amplituden der ausgesuchten Signalfrequenzen des Druckschwingungssignals in Abhängigkeit von Referenz-Einlassventilhub-Phasendifferenz und Referenz-Auslassventilhub-Phasendifferenz in Referenzlinien-Kennfeldern.
Auf diese Weise können die Ermittlung der Einlassventilhub-Phasendifferenz und der Auslassventilhub-Phasendifferenz auf einfache Weise durchgeführt werden.

In vorteilhafter Weise können die oben genannten Referenzlinien-Kennfelder in einem Speicherbereich eines ohnehin vorhandenen Motor-Steuergerät des betreffenden Serien-Verbrennungsmotors gespeichert werden und stehen so im Betrieb des Serien-Verbrennungsmotors zur Anwendung im vorgenannten Verfahren unmittelbar zur Verfügung, ohne separate Speichermittel zu benötigen.

In weiter vorteilhafter Weise kann aus den, wie oben beschrieben ermittelten Referenzlinien-Kennfeldern der ausgesuchten Signalfrequenzen des Druckschwingungssignals für die jeweilige Signalfrequenz algebraische Modell-Funktionen hergeleitet werden, die den Verlauf der jeweiligen Referenzlinien gleicher Phasenlagen und den Verlauf der jeweiligen Referenzlinien gleicher Amplituden der ausgesuchten Signalfrequenzen des Druckschwingungssignals in Abhängigkeit von Referenz-Einlassventilhub-Phasendifferenz sowie Referenz-Auslassventilhub-Phasendifferenz abbilden. Auf diese Weise werden jeweilige mathematische Formulierungen der Referenzlinien gleicher Phasenlagen und der Referenzlinien gleicher Amplituden zur Verfügung gestellt, die im weiteren Verfahren zur analytischen Ermittlung des gemeinsamen Schnittpunktes von Linien gleicher Phasenlagen und von Linien gleicher Amplituden und somit der Identifizierung der Einlassventilhub-Phasendifferenz und der Auslassventilhub-Phasendifferenz herangezogen werden können.

In Weiterbildung der Erfindung können die wie zuvor beschrieben ermittelten algebraischen Modell-Funktionen für die ausgesuchten Signalfrequenzen in einem Speicherbereich eines Motor-Steuergeräts des betreffenden Serien-Verbrennungsmotors gespeichert werden. Auf diese Weise stehen die Modell-Funktionen unmittelbar in der Steuerung zur Verfügung und können auf einfache Weise zur jeweils aktuellen Ermittlung der Linien gleicher Phasenlage herangezogen werden. Es ist somit nicht erforderlich entsprechende Referenzlinien-Kennfelder im Speicher vorzuhalten, die große Datenmengen beinhalten und somit einen erhöhten Speicherplatzbedarf verursachen.

Eine besonders vorteilhafte Ausführung des vorausgehend beschriebenen erfindungsgemäßen Verfahrens ist dadurch gekennzeichnet, dass die Projektion der Linien gleicher Amplituden und gleicher Phasenlagen in eine gemeinsame, durch Einlassventilhub-Phasendifferenz und Auslassventilhub-Phasendifferenz aufgespannte Ebene und die Ermittlung des gemeinsamen Schnittpunktes dieser Linien, auf der Basis algebraischer Funktionen erfolgt. Das vorausgehend zur besseren Anschauung bildlich dargestellte Verfahren wird also in dieser Ausführung in algebraische Funktionen, also in mathematische Formulierungen umgesetzt. Auf diese Weise kann das Verfahren besonders einfach auf einer elektronischen Recheneinheit, beispielsweise auf einem programmierbaren Motor-Steuergerät mit Hilfe entsprechender Programm-Algorithmen durchgeführt werden.

Vorteilhaft kann das Verfahren auf einem elektronischen programmierbaren Motor-Steuergerät des betreffenden Serien-Verbrennungsmotors ausgeführt werden. Dies hat den Vorteil, dass kein separates Steuer- oder Rechengerät erforderlich ist und die Algorithmen des Verfahrens in die entsprechenden Abläufe der Motor-Steuerprogramme eingebunden werden können.

In erweiterter Ausführung der Erfindung wird eine Anpassung von Steuergrößen oder Steuerroutinen, zum Beispiel die einzuspritzende Kraftstoffmasse, der Startzeitpunkt der Einspritzung, der Zündzeitpunkt, die Ansteuerung der Phasensteller der Nockenwellen, etc., im Sinne einer Korrektur der oder Anpassung an die ermittelte Einlassventilhub-Phasendifferenz und die ermittelte Auslassventilhub-Phasendifferenz in der Motorsteuerung vorgenommen. So ist es möglich den Verbrennungsvorgang auf die realen Gegebenheiten des jeweiligen Serien-Verbrennungsmotors zu optimieren und so den Kraftstoffbedarf und die Emissionswerte zu reduzieren.

In vorteilhafter Weise entsprechen zur Durchführung des erfindungsgemäßen Verfahrens die ausgesuchten Signalfrequenzen der Ansaugfrequenz als Grundfrequenz oder 1. Harmonische und den weiteren vielfachen, also der 2. bis n. der sogenannten "Harmonischen" der Ansaugfrequenz des Verbrennungsmotors. Dabei steht die Ansaugfrequenz wiederum in eindeutigem Zusammenhang mit der Drehzahl des Verbrennungsmotors. Für diese ausgesuchten Signalfrequenzen wird dann, unter Heranziehung des parallel erfassten Kurbelwellen-Phasenwinkelsignals, die in diesem Zusammenhang als Phasenwinkel bezeichnete Phasenlage der ausgesuchten Signalfrequenzen in Bezug auf den Kurbelwellen-Phasenwinkel ermittelt.
Hierdurch ergeben sich besonders eindeutige und somit gut auszuwertende Ergebnisse bei der Ermittlung der Linien gleicher Phasenlagen und der Linien gleicher Amplituden, die so eine hohe Genauigkeit der Ergebnisse hervorbringt.

In weiter vorteilhafter Weise können die dynamischen Druckschwingungen mit Hilfe eines serienmäßigen, ohnehin bereits vorhandenen Drucksensors im Luft-Ansaugtrakt gemessen werden. Dies hat den Vorteil, dass kein zusätzlicher Sensor angeordnet werden muss und so keine Zusatzkosten zur Durchführung des erfindungsgemäßen Verfahrens verursacht werden.

Das zur Durchführung des erfindungsgemäßen Verfahrens erforderliche Kurbelwellen-Phasenwinkelsignal kann mit einem mit der Kurbelwelle verbundenen Zähnerad und einem Hall-Sensor ermittelt werden. Eine solche Sensoranordnung ist ebenfalls in modernen Verbrennungsmotoren zu anderen Zwecken bereits vorhanden. Das damit erzeugte Kurbelwellen-Phasenwinkelsignal kann in einfacher Weise von dem erfindungsgemäßen Verfahren mitbenutzt werden. Dies hat den Vorteil, dass kein zusätzlicher Sensor angeordnet werden muss und so keine Zusatzkosten zur Durchführung des erfindungsgemäßen Verfahrens verursacht werden.

Eine detailierte Betrachtung der Zusammenhänge auf denen die Erfindung basiert erfolgt im Weiteren unter Zuhilfenahme der Figuren. Es zeigt:
- Fig. 1:: Eine vereinfachte Schemazeichnung eines Hubkolben-Verbrennungsmotors
- Fig. 2:: Die Schemazeichnung gemäß Fig. 1 mit Kennzeichnung der möglichen Lage- und Winkelabweichungen maßgeblicher Komponenten des Hubkolben-Verbrennungsmotors
- Fig. 3:: Zwei Dreidimensionale Diagramme zur Darstellung der Abhängigkeit der Phasenlage (PL_SF) und der Amplitude (Amp_SF) einer jeweiligen ausgesuchten Signalfrequenz des im Luft-Ansaugtrakt gemessenen Druckschwingungssignals von der Einlassnockenwellen-Winkeldifferenz und der Auslassnockenwellen-Winkeldifferenz.
- Fig. 4:: Zwei zweidimensionale Diagramme zur Darstellung von Linien gleicher Phasenlagen und Linien gleicher Amplituden für eine jeweils ausgesuchte Signalfrequenz des im Luft-Ansaugtrakt gemessenen Druckschwingungssignals, projeziert in eine von der Einlassnockenwellen-Winkeldifferenz und der Auslassnockenwellen-Winkeldifferenz aufgespannte Ebene.
- Fig. 5:: Ein zweidimensionales Diagramm gemäß Fig. 4 mit einer eingezeichneten Linie gleicher Phasenlagen und einer eingezeichneten Linie gleicher Amplituden einer jeweiligen Signalfrequnez mit einem Schnittpunkt bei einer bestimmten Kombination von Einlassnockenwellen-Winkeldifferenz und der Auslassnockenwellen-Winkeldifferenz.
- Fig. 6:: Zweidimensionale Diagramme für Linien gleicher Phasenlage und Linien gleicher Amplitude wie in Figur 4 bei jeweils drei unterschiedlichen Signalfrequnezen.
- Fig. 7:: Ein vereinfachtes Blockdiagramm zur Veranschaulichung des Verfahrens

Funktions- und Benennungsgleiche Teile sind in den Figuren durchgängig mit denselben Bezugszeichen versehen.

Die Erfindung beruht auf der folgenden Erkenntnis:
Bei Variation der Einlassventilhub-Phasendifferenz ΔEVH und der Auslassventilhub-Phasendifferenz ΔAVH an einem "idealen" Referenz-Verbrennungsmotors und der Analyse des Druckschwingungssignals im Luft-Ansaugtrakt, im Folgenden kurz als Druckschwingungssignal bezeichnet, mittels diskreter Fourier-Analyse und der Betrachtung einzelner ausgesuchter Signalfrequenzen, die jeweils der Ansaugfrequenz oder einem Vielfachen der Ansaugfrequenz entsprachen, hat sich gezeigt, dass sowohl die Phasenlagen als auch die Amplituden der einzelnen ausgesuchten Signalfrequenzen, also die relative Lage des Druckschwingungssignals in Bezug auf das Kurbelwellen-Phasenwinkelsignal und die Größe des Signalhubs, in Abhängigkeit stehen von der Einlassventilhub-Phasendifferenz ΔEVH und der Auslassventilhub-Phasendifferenz ΔAVH.

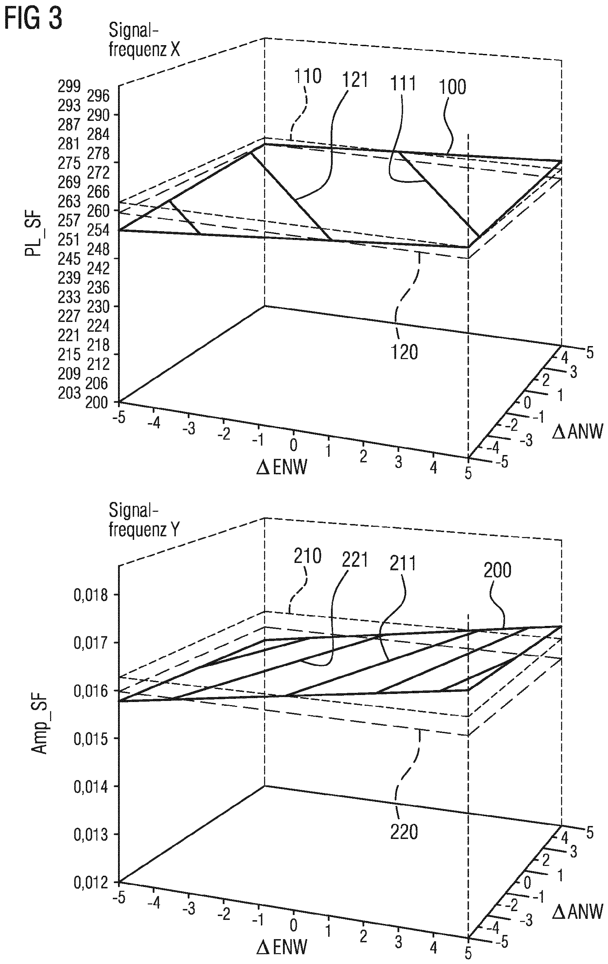

In Figur 3 ist diese Abhängigkeit jeweils für die Phasenlagen PL_SF (oberes Diagramm) und die Amplituden Amp_SF (unteres Diagramm) bei einer jeweiligen Signalfrequenz X und Signalfrequenz Y, dargestellt.
Zur Variation der Einlassventilhub-Phasendifferenz ΔEVH und der Auslassventilhub-Phasendifferenz ΔAVH wurde dazu mittels eines jeweiligen Phasenstellers die Einlassnockenwellen-Winkeldifferenz ΔENW und die Auslassnockenwellen-Winkeldifferenz ΔANW im Bereich zwischen -5° und +5° variiert und die jeweils zugehörige Phasenlage PL_SF der jeweiligen Signalfrequenz bzw. die jeweils zugehörige Amplitude Amp_SF des Druckschwingungssignals senkrecht über der so aufgespannten ΔENW-ΔANW-Ebene aufgetragen. Für die ausgesuchte Signalfrequenz X ergibt sich so eine geneigte Phasen-Fläche 100 bzw. eine geneigte Amplitudenfläche 200 in dem aufgespannten dreidimensionalen Raum. Legt man nun parallel zur ΔENW-ΔANW-Ebene liegende Schnittebenen 110, 120, 210, 220 in Höhe verschiedener Phasenlagen PL_SF bzw. Amplituden Amp-SF der jeweiligen Signalfrequenz X, Y, so ergeben sich jeweils Schnittlinien mit der jeweiligen Phasen-Fläche 100 bzw. Amplitudenfläche 200, die als Linien gleicher Phasenlagen 111, 121 bzw. als Linien gleicher Amplituden 211, 221 bezeichnet werden. Das heißt für alle entlang einer solchen Linie gleicher Phasenlagen liegenden ΔENW-ΔANW-Kombinationen ergibt sich die gleiche Phasenlage und für alle entlang einer solchen Linie gleicher Amplituden liegenden ΔENW-ΔANW-Kombinationen ergibt sich die gleiche Amplitude der jeweils ausgesuchten Signalfrequenzen X, Y des Druckschwingungssignals. Im Umkehrschluss heißt dies, dass einer ermittelten Phasenlage und einer ermittelten Amplitude einer jeweiligen Signalfrequenz des Druckschwingungssignals keine eindeutige ΔENW-ΔANW-Kombination zugewiesen werden kann.

Im oberen Diagramm der Figur 3 sind bei Signalfrequenz X die Phasen-Fläche 100 und beispielhaft zwei Schnittebenen 110, 120 bei Phasenlage 263° und 260° eingezeichnet. Für Phasenlage 263° ergibt sich die Linie gleicher Phasenlage 111 und für Phasenlage 260° ergibt sich die Linie gleicher Phasenlage 121.

Im unteren Diagramm der Figur 3 sind bei Signalfrequenz Y die Amplituden-Fläche 200 und beispielhaft zwei Schnittebenen 210, 220 bei Amplitude 0,0163 und 0,0160 eingezeichnet. Für Amplitude 0,0160 ergibt sich die Linie gleicher Amplituden 221 und für Amplitude 0,0163 ergibt sich die Linie gleicher Amplitude 211.

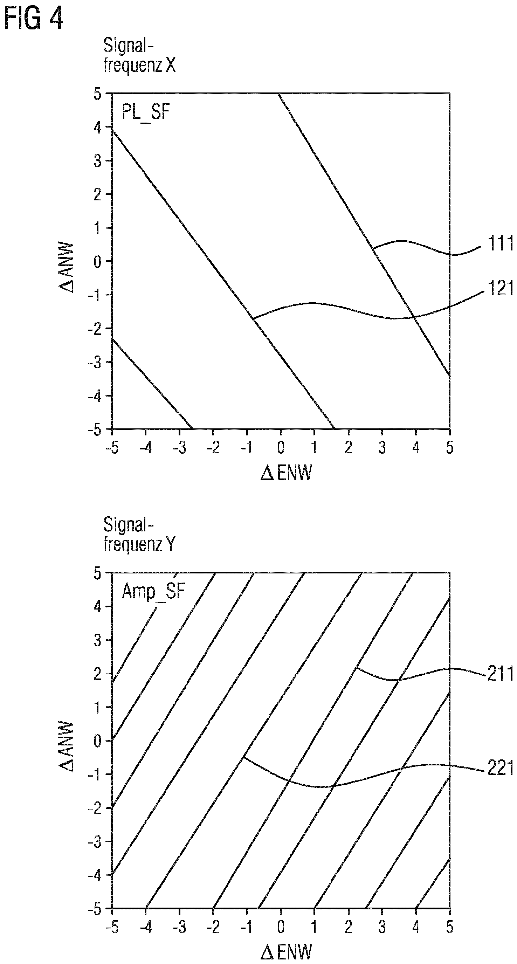

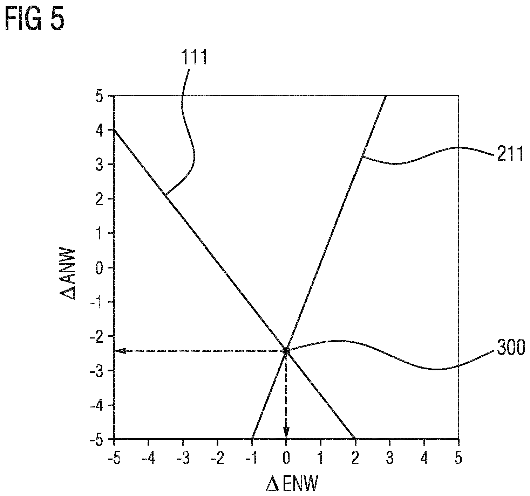

Zur weiteren Untersuchung der Zusammenhänge wurden nun die Linien gleicher Phasenlage sowie auch die Linien gleicher Amplituden der jeweils ausgesuchten Signalfrequenz des Druckschwingungssignals in die ΔENW-ΔANW-Ebene projiziert. Dies ist in Figur 4 analog zur Figur 3 für die Phasenlage PL_SF (oberes Diagramm) und die Amplitude PL_SF (unteres Diagramm) getrennt dargestellt. Die entsprechenden Linien gleicher Phasenlagen 111, 121 für Signalfrequenz X bei 263° und 260° sowie die Linie gleicher Amplituden 211, 221 für Signalfrequenz Y bei 0,0163 und 0,0160 sind auch in dieser Darstellung mit entsprechenden Bezugszeichen gekennzeichnet. Es zeigt sich, dass die Linien gleicher Phasenlagen und die Linien gleicher Amplituden der jeweils ausgesuchten Signalfrequenzen gegenläufige Steigungen aufweisen. Projiziert man nun die Linien gleicher Phasenlagen und die Linien gleicher Amplituden in der ΔENW-ΔANW-Ebene übereinander, wie dies in Figur 5 anhand der Linie gleicher Phasenlage 111 und der Linie gleicher Amplituden 211 dargestellt ist, so zeigt sich, dass sich die Linie gleicher Phasenlage und die Linie gleicher Amplitude 211 in einem gemeinsamen Schnittpunkt 300 schneiden, der somit eine einzige ΔENW-ΔANW-Kombination, dargestellt durch die eingezeichneten gestrichelten Pfeillinien, repräsentiert. Da unter Zugrundelegung eines idealen Referenzmotors von einem unmittelbaren und unbeeinflussten Zusammenwirken der Einlassnockenwelle 23 mit den Einlassventilen 22 und der Auslassnockenwelle 33 mit den Auslassventilen 32 ausgegangen werden kann, kann einer Einlassnockenwellen-Winkeldifferenz ΔENW eine konkrete Einlassventilhub-Phasendifferenz ΔEVH und der Auslassnockenwellen-Winkeldifferenz ΔANW eine konkrete Auslassventilhub-Phasendifferenz ΔAVH zugeordnet werden.

Geht man also von sonst idealen Verhältnissen aus, so lässt sich durch Ermittlung der Phasenlage und der Amplitude einer jeweils ausgesuchten Signalfrequenz des Druckschwingungssignals und unter Heranziehung und Überlagerung der zuordenbaren bekannten Linien gleicher Phasenlage und gleicher Amplitude der jeweiligen Signalfrequenz, ein einziger Schnittpunkt der Linie gleicher Phasenlagen und der Linie gleicher Amplituden ermitteln und daraus der Wert der Einlassventilhub-Phasendifferenz ΔEVH und der Auslassventilhub-Phasendifferenz ΔAVH bestimmen.

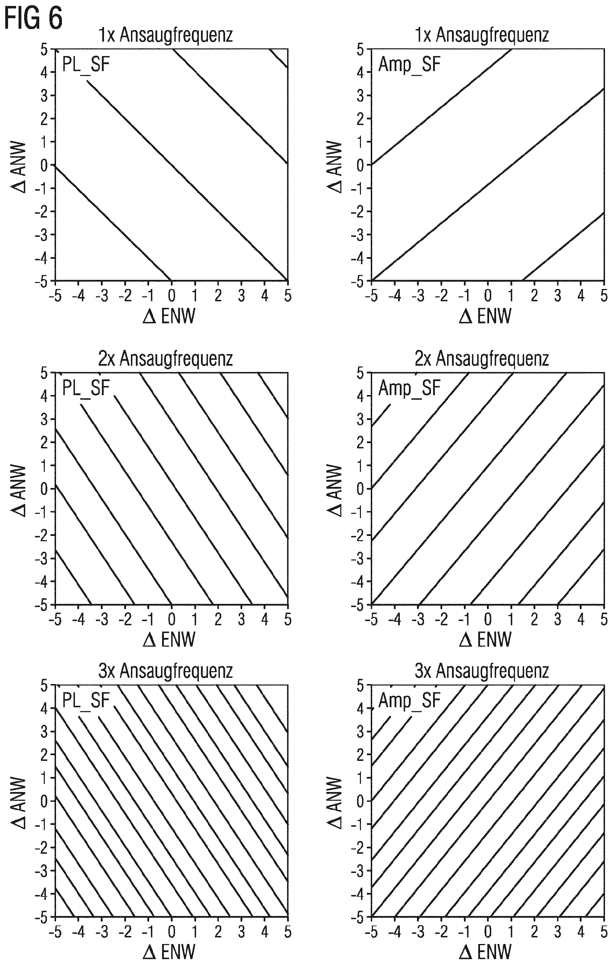

In Figur 6 sind nun zur weiteren Verdeutlichung der Zusammenhänge auf der linken Seite drei Diagramme mit in die ΔENW-ΔANW-Ebene projizierten Linien gleicher Phasenlage analog zum oberen Diagramm der Figur 4 und auf der rechten Seite drei Diagramme mit in die ΔENW-ΔANW-Ebene projizierten Linien gleicher Amplitude analog zum unteren Diagramm der Figur 4, jeweils für drei Verschiedene Signalfrequenzen dargestellt. Dabei handelt es sich um die Ansaugfrequenz selbst (1. Harmonische), obere Diagramme, die doppelte Ansaugfrequenz (2. Harmonische), mittlere Diagramme und die dreifache Ansaugfrequenz (3. Harmonische), untere Diagramme.

Es ist deutlich zu erkennen, dass mit steigender Signalfrequenz sowohl bei den Linien gleicher Phasenlage als auch bei den Linien gleicher Amplitude das Gefälle bzw. die Steigung zunimmt sowie der Abstand der Linien abnimmt. Es hat sich nun gezeigt, dass es bei der Kombination einer Linie gleicher Phasenlage mit einer Linie gleicher Amplitude für das Ergebnis, das im Schnittpunkt der beiden Linien zu finden ist, unerheblich ist, ob jeweils Linien der gleichen Signalfrequenz oder Linien unterschiedlicher Signalfrequenzen miteinander zum Schnittpunkt gebracht werden. Gleichwohl scheint es sinnvoll jeweils Linien gleicher Phasenlage und Linien gleicher Amplitude der gleichen Signalfrequenz zu kombinieren.
Bei Ermittlung der Schnittpunkte von Paarungen von Linien gleicher Phasenlage und Linien gleicher Amplitude bei mehreren, jeweils übereinstimmenden Signalfrequenzen oder durch Variation der Paarungen von Linien gleicher Phasenlage und Linien gleicher Amplitude bei mehreren jeweils unterschiedlichen Signalfrequenzen, erhält man prinzipiell jeweils den gleichen Schnittpunkt. Durch Abweichungen und Toleranzen bei den Messungen ergibt sich jedoch eine geringfügige Streuung der Schnittpunkte. Durch Mittelwertbildung lässt sich dann aus den mehreren Schnittpunkten ein Schnittpunkt und somit jeweils ein Wert für die Einlassnockenwellen-Winkeldifferenz ΔENW bzw. die Einlassventilhub-Phasendifferenz ΔEVH und die Auslassnockenwellen-Winkeldifferenz ΔANW bzw. die Auslassventilhub-Phasendifferenz ΔAVH ermitteln.
Die in den Figuren 3 bis 6 graphisch dargestellten Zusammenhänge dienen der einfacheren Verständlichkeit der Grundlagen des Verfahrens. Selbstverständlich können diese Zusammenhänge auch anhand entsprechender algebraischer Formulierungen dargestellt und das Verfahren auf dieser Basis ausgeführt werden. Dafür werden zum Beispiel zur Darstellung der Linien gleicher Phasenlagen, auf Basis mathematisch-physikalischer Gesetzmäßigkeiten, algebraische Modellfunktionen abgeleitet, die zur Ermittlung des gemeinsamen Schnittpunktes und der erforderlichen Phasenverschiebung herangezogen werden können.

Die Erfindung des Verfahrens zur kombinierten Identifizierung einer Einlassventilhub-Phasendifferenz ΔEVH und einer Auslassventilhub-Phasendifferenz ΔAVH eines Verbrennungsmotors im Betrieb basiert auf den oben dargestellten Erkenntnissen und stellt sich demnach in einem Beispiel wie folgt dar:
Im Betrieb des Verbrennungsmotors werden laufend die dynamischen Druckschwingungen im Luft-Ansaugtrakt gemessen. Dies geschieht vorzugsweise an bestimmten ausgesuchten Betriebspunkten des Verbrennungsmotors. Die jeweilige Messung ergibt ein Druckschwingungssignal. Dieses Druckschwingungssignal wird einem Steuergerät des Verbrennungsmotors zugeführt. Im Steuergerät wird das Druckschwingungssignal mittels dort hinterlegter Programm-Algorithmen einer Diskreten-Fourier-Transformation unterzogen und die Phasenlage sowie die Amplitude zumindest einer ausgesuchten Signalfrequenz, vorzugsweise der ersten und/oder weiteren Harmonischen der Ansaugfrequenz des Verbrennungsmotors, der gemessenen Druckschwingungen der Ansaugluft im Luft-Ansaugtrakt, in Bezug auf das Kurbelwellen-Phasenwinkelsignal ermittelt. In der Folge werden nun, für die jeweilige ausgesuchte Signalfrequenz, auf Basis der ermittelten jeweiligen Phasenlage bzw. der Amplitude, jeweils eine entsprechende Linie gleicher Phasenlage und eine Linie gleicher Amplitude ermittelt. Dies erfolgt jeweils entweder durch Auswahl einer Referenzlinie der gleichen Phasenlage bzw. Amplitude aus für die entsprechende Verbrennungsmotor-Serie typischen, in einem Speicherbereich des Steuergeräts hinterlegten Referenzlinien-Kennfeldern oder durch Berechnung mittels jeweiligen, für die entsprechende Verbrennungsmotor-Serie typischen, in einem Speicherbereich des Steuergeräts hinterlegten algebraischen Modell-Funktionen.

Die so ermittelten Linien gleicher Phasenlage und Linien gleicher Amplitude der jeweils ausgesuchten Signalfrequenz werden dann mittels entsprechender, im Steuergerät hinterlegter Programm-Algorithmen in eine gemeinsame aus Einlassventilhub--Phasendifferenz ΔEVH und Auslassventilhub-Phasendifferenz ΔAVH aufgespannte Ebene projiziert und zu einem jeweiligen gemeinsamen Schnittpunkt gebracht. Aus der Lage dieses gemeinsamen Schnittpunktes in der aus Einlassventilhub-Phasendifferenz ΔEVH und Auslassventilhub-Phasendifferenz ΔAVH aufgespannten Ebene kann nun die Einlassventilhub-Phasendifferenz ΔEVH und Auslassventilhub-Phasendifferenz ΔAVH bestimmt werden.

Um die Genauigkeit des Verfahrens weiter zu steigern, kann man nun bei der Ermittlung der Einlassventilhub-Phasendifferenz und Auslassventilhub-Phasendifferenz mehrere, der wie oben beschrieben ermittelten, Schnittpunkte heranziehen und den Mittelwert bilden, um so ein eindeutiges, in seiner Genauigkeit nochmals verbessertes Ergebnis zu erzielen.

Zur Durchführung des Verfahrens ist es erforderlich, dass spezifische Kennfelder mit Referenzlinien gleicher Phasenlage und spezifische Kennfelder mit Referenzlinien gleicher Amplitude oder entsprechende algebraische Modell-Funktionen zur Verfügung stehen. Diese sind abhängig von der Bauart und der konstruktiven Detailausführung der Baureihe/Serie eines Verbrennungsmotors und müssen deshalb an einem für die Serie typischen, baugleichen Referenz-Verbrennungsmotor vorab ermittelt werden. Dazu wird an dem Referenz-Verbrennungsmotor das Druckschwingungssignal der Ansaugluft im Luft-Ansaugtrakt in möglichst vielen Betriebspunkten, insbesondere an bestimmten ausgesuchten Betriebspunkten, unter Variation der Einlassventilhub-Phasendifferenz ΔEVH und der Auslassventilhub-Phasendifferenz ΔAVH aufgenommen, einer Diskreten-Fourier-Transformation unterzogen und die Phasenlagen sowie die Amplituden für die ausgesuchten Signalfrequenzen in Abhängigkeit von der Einlassventilhub-Phasendifferenz ΔEVH und der Auslassventilhub-Phasendifferenz ΔAVH abgespeichert. Dabei ist darauf zu achten, dass keine Kolbenhub-Phasendifferenz ΔKH die Ergebnisse überlagert bzw. diese verfälscht.

Auf Basis dieser so ermittelten dreidimensionalen Datenfelder können nun für die einzelnen ausgesuchten Signalfrequenzen die Linien gleicher Phasenlage und die Linien gleicher Amplitude ermittelt und in entsprechende Kennfelder gespeichert werden, respektive die algebraischen Modell-Funktionen zur Berechnung der Linien gleicher Phasenlage und der Linien gleicher Amplitude ermittelt werden.

Die so ermittelten Kennfelder und/oder Modellfunktionen werden dann in einem Speicherbereich eines Steuergeräts jedes baugleichen Serien-Verbrennungsmotors hinterlegt und können zur Durchführung des erfindungsgemäßen Verfahrens herangezogen werden.

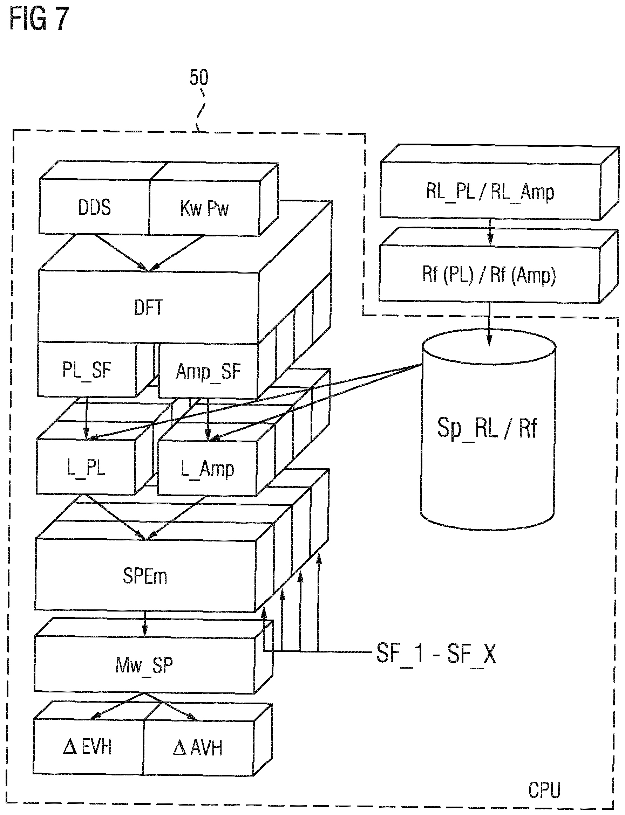

In Figur 7 ist eine Ausführung des erfindungsgemäßen Verfahrens zur kombinierten Identifizierung einer Einlassventilhub-Phasendifferenz und einer Auslassventilhub-Phasendifferenz eines Zylinders eines Serien Verbrennungsmotors im Betrieb nochmals in Form eines vereinfachten Blockdiagrammes mit den wesentlichen Schritten dargestellt.
Zu Beginne werden dem jeweiligen Zylinder zuordenbare dynamische Druckschwingungen der Ansaugluft im Luft-Ansaugtrakt des betreffenden Serien-Verbrennungsmotors im Betrieb gemessen und daraus ein entsprechendes Druckschwingungssignal erzeugt und es wird gleichzeitig ein Kurbelwellen-Phasenwinkelsignal ermittelt, was durch die parallel angeordneten, mit DDS (Dynamisches Druckschwingungssignal) und KwPw (Kurbelwellen-Phasenwinkelsignal)gekennzeichneten Blöcke dargestellt ist.

Aus dem Druckschwingungssignal DDS wird dann mit Hilfe Diskreter-Fourier-Transformation DFT die Phasenlage und die Amplitude zumindest je einer ausgesuchten Signalfrequenz der gemessenen Druckschwingungen in Bezug auf das Kurbelwellen-Phasenwinkelsignal KwPw ermittelt, was durch die mit DFT (Diskrete-Fourier-Transformation), PL_SF (Phasenlage der jeweiligen Signalfrequenz) und Amp_SF (Amplitude der jeweiligen Signalfrequenz) gekennzeichneten Blöcke dargestellt ist. Dabei können jeweils mehrere Werte für entsprechend mehrere unterschiedliche Signalfrequenzen SF_1 bis SF_X ermittelt werden.

Auf Basis der ermittelten Phasenlage PL_SF und Amplitude Amp_SF einer jeweiligen ausgesuchten Signalfrequenz SF_1....SF_X, wird dann je eine in Abhängigkeit von Einlassventilhub-Phasendifferenz und Auslassventilhub-Phasendifferenz stehende Linie gleicher Phasenlage L_PL und gleicher Amplitude L_Amp der jeweils gleichen Signalfrequenz SF_1....SF_X ermittelt, wie mittels der entsprechend gekennzeichneten Blöcke verdeutlicht wird . Dies geschieht mit Hilfe von in Referenzlinien-Kennfeldern gespeicherten oder mittels einer jeweiligen algebraischen Modell-Funktion ermittelten Referenzlinien der gleichen Phasenlage RL-PL und der gleichen Amplitude RL_Amp der jeweiligen Signalfrequenz SF_1....SF_X. Hierzu ist in dem Diagramm der Figur 7 ein mit Sp_RL/Rf gekennzeichneter Speicherbereich eines Motor-Steuergerätes 50 dargestellt, aus dem die darin zur Verfügung gestellten Referenzlinien gleicher Phasenlage RL_PL und Referenzlinien gleicher Amplitude RL_Amp oder auch entsprechende algebraische Modell-Funktionen Rf(PL) bzw. Rf(Amp) zur Ermittlung dieser Linien abgerufen werden können.

Im Weiteren wird dann zumindest ein jeweiliger gemeinsamer Schnittpunkt einer ermittelten Linie gleicher Phasenlage L_PL und einer ermittelten Linie gleicher Amplitude L_Amp der jeweiligen Signalfrequenz SF_1...SF_X durch Projektion in eine gemeinsame, durch Einlassventilhub-Phasendifferenz und Auslassventilhub-Phasendifferenz aufgespannte Ebene ermittelt, was durch den mit SPEm (Schnittpunkt-Ermittlung) gekennzeichneten Block dargestellt ist.
Wie aus der Darstellung ersichtlich werden hier mehrere Schnittpunkte aus mehreren Paarungen von Linien gleicher Phasenlage L_PL und Linien gleicher Amplitude L_Amp ermittelt und dann daraus ein Mittelwert gezogen, was durch den mit Mw_SP (Mittelwert der Schnittpunkte) bezeichneten Block dargestellt ist. Dies dient der Erhöhung der Genauigkeit des Verfahrens.

Schließlich wird aus dem ermittelten Mittelwert der Schnittpunkte Mw_SP der Linie gleicher Phasenlage L_PL und der Linie gleicher Amplitude L_Amp der jeweiligen Signalfrequenz die Einlassventilhub-Phasendifferenz ΔEVH und der Auslassventilhub-Phasendifferenz ΔAVH bestimmt, was durch die entsprechend gekennzeichneten Blöcke dargestellt ist.

Weiterhin zeigt Figur 7 die dem oben beschriebenen Verfahren vorausgehenden Schritte der Vermessung eines Referenz-Verbrennungsmotors zur Bestimmung von Referenzlinien gleicher Phasenlagen RL_PL und gleicher Amplituden RL_Amp ausgesuchter Signalfrequenzen des Druckschwingungssignals im Luft-Ansaugtrakt in Abhängigkeit von Referenz-Einlassventilhub-Phasendifferenz und Referenz-Auslassventilhub-Phasendifferenz, sowie die Speicherung der Referenzlinien gleicher Phasenlagen und gleicher Amplituden der ausgesuchten Signalfrequenzen des Druckschwingungssignals jeweils in Abhängigkeit von Referenz-Einlassventilhub-Phasendifferenz und Referenz-Auslassventilhub-Phasendifferenz in Referenzlinien-Kennfeldern, was symbolisch durch dem mit RL_PL/RL_Amp bezeichneten Block dargestellt ist.

Der mit Rf(PL)/Rf(Amp) gekennzeichnete Block beinhaltet die Herleitung von algebraischen Modell-Funktionen, die als Referenzlinienfunktionen gleicher Phasenlage Rf(PL) den Verlauf der jeweiligen Referenzlinien gleicher Phasenlagen und als Referenzlinienfunktionen gleicher Amplitude RF(Amp) den Verlauf der jeweiligen Referenzlinien gleicher Amplituden der ausgesuchten Signalfrequenzen des Druckschwingungssignals in Abhängigkeit von Referenz-Einlassventilhub-Phasendifferenz sowie Referenz-Auslassventilhub-Phasendifferenz abbilden, auf Basis der zuvor ermittelten Referenzlinien-Kennfelder.

Die Referenzlinien-Kennfelder bzw. Referenzlinienfunktionen gleicher Phasenlage und Referenzlinienfunktionen gleicher Amplitude werden dann in einem Speicherbereich Sp_RL/Rf eines Motor-Steuergeräts 50 CPU des betreffenden Serien-Verbrennungsmotors gespeichert, wo sie zur Durchführung des zuvor erläuterten erfindungsgemäßen Verfahrens zur Verfügung stehen.

Die im Blockdiagramm gestrichelt eingezeichnete Umrahmung der entsprechenden Blöcke, stellt symbolisch die Grenze eines elektronischen programmierbaren Motor-Steuergerät 50 (CPU) des betreffenden Serien-Verbrennungsmotors dar, auf dem das Verfahren ausgeführt wird.

## Patentansprüche

1. Verfahren zur kombinierten Identifizierung einer Einlassventilhub-Phasendifferenz (ΔEVH) und einer Auslassventilhub-Phasendifferenz (ΔAVH) eines Zylinders (2) eines Serien Verbrennungsmotors im Betrieb, wobei
- dem Zylinder (2) zuordenbare dynamische Druckschwingungen der Ansaugluft im Luft-Ansaugtrakt (20) des betreffenden Serien-Verbrennungsmotors im Betrieb gemessen werden und daraus ein entsprechendes Druckschwingungssignal erzeugt wird und wobei gleichzeitig ein Kurbelwellen-Phasenwinkelsignal ermittelt wird,
- wobei aus dem Druckschwingungssignal mit Hilfe Diskreter-Fourier-Transformation (DFT) die Phasenlage (PL_SF) und die Amplitude (Amp_SF) zumindest je einer ausgesuchten Signalfrequenz (SF_1...SF_X) der gemessenen Druckschwingungen in Bezug auf das Kurbelwellen-Phasenwinkelsignal ermittelt werden, **gekennzeichnet durch** die folgenden weiteren Schritte:
- auf Basis der ermittelten Phasenlage (PL_SF) und Amplitude (Amp_SF) der jeweiligen ausgesuchten Signalfrequenz (SF_1...SF_X), ermitteln je einer in Abhängigkeit von Einlassventilhub-Phasendifferenz (ΔEVH) und Auslassventilhub-Phasendifferenz (ΔAVH) stehenden Linie gleicher Phasenlage (111, 121) und gleicher Amplitude (211, 221) der jeweils gleichen Signalfrequenz (SF_1...SF_X)mit Hilfe von in Referenzlinien-Kennfeldern gespeicherten oder mittels einer jeweiligen algebraischen Modell-Funktion ermittelten Referenzlinien der gleichen Phasenlage (RL_Pl) und der gleichen Amplitude (RL_Amp) der jeweiligen Signalfrequenz (SF_1...SF_X);
- Ermitteln zumindest eines jeweiligen gemeinsamen Schnittpunktes (300) einer ermittelten Linie gleicher Phasenlage (111, 121) und einer ermittelten Linie gleicher Amplitude (211, 221) der jeweiligen Signalfrequenz (SF_1...SF_X)durch Projektion in eine gemeinsame, durch Einlassventilhub-Phasendifferenz (ΔEVH) und Auslassventilhub-Phasendifferenz (ΔAVH) aufgespannte Ebene;
- Bestimmen der Einlassventilhub-Phasendifferenz (ΔEVH) und der Auslassventilhub-Phasendifferenz (ΔAVH) aus dem ermittelten gemeinsamen Schnittpunkt (300) der Linie gleicher Phasenlage (111, 121) und der Linie gleicher Amplitude (211, 221) der jeweiligen Signalfrequenz (SF_1...SF_X).

2. Verfahren nach Anspruch 1, **dadurch gekennzeichnet, dass** die Phasenlagen und die Amplituden mehrerer ausgesuchter Signalfrequenzen (SF_1...SF_X) ermittelt werden und dass auf Basis der ermittelten Phasenlagen (PL_SF) und Amplituden (Amp_SF) der jeweiligen ausgesuchten Signalfrequenzen (SF_1...SF_X), die jeweiligen Linien gleicher Phasenlage (111, 121) und gleicher Amplitude (211, 221) der ausgesuchten Signalfrequenzen (SF_1...SF_X) ermittelt werden und dass mehrere gemeinsame Schnittpunkte jeweils einer ermittelten Linie gleicher Phasenlage (111, 121) und einer ermittelten Linie gleicher Amplitude (211, 221) der ausgesuchten Signalfrequenzen ermittelt werden und dass die Einlassventilhub-Phasendifferenz (ΔEVH) und die Auslassventilhub-Phasendifferenz (ΔAVH) aus den mehreren Schnittpunkten durch Mittelwertbildung (Mw_SP) ermittelt werden.

3. Verfahren nach Anspruch 1 oder 2, **dadurch gekennzeichnet, dass** es die folgenden vorausgehenden Schritte umfasst:
- Vermessung eines Referenz-Verbrennungsmotors zur Bestimmung von Referenzlinien gleicher Phasenlagen (RL_Pl) und gleicher Amplituden (RL_Amp) ausgesuchter Signalfrequenzen (SF_1...SF_X) des Druckschwingungssignals im Luft-Ansaugtrakt (20) in Abhängigkeit von Referenz-Einlassventilhub-Phasendifferenz und Referenz-Auslassventilhub-Phasendifferenz und
- Speicherung der Referenzlinien gleicher Phasenlagen (RL_Pl) und gleicher Amplituden (RL_Amp) der ausgesuchten Signalfrequenzen (SF_1...SF_X) des Druckschwingungssignals jeweils in Abhängigkeit von Referenz-Einlassventilhub-Phasendifferenz und Referenz-Auslassventilhub-Phasendifferenz in Referenzlinien-Kennfeldern.

4. Verfahren nach Anspruch 3, **dadurch gekennzeichnet, dass** die Referenzlinien-Kennfelder in einem Speicherbereich (SP_RL/Rf) eines Motor-Steuergeräts (50) des betreffenden Serien-Verbrennungsmotors gespeichert werden.

5. Verfahren nach Anspruch 3, **dadurch gekennzeichnet, dass** aus den Referenzlinien-Kennfeldern der ausgesuchten Signalfrequenzen (SF_1...SF_X) des Druckschwingungssignals für die jeweilige Signalfrequenz (SF_1 ...SF_X) algebraische Modell-Funktionen (Rf(PL), Rf(Amp)) hergeleitet werden, die den Verlauf der jeweiligen Referenzlinien gleicher Phasenlagen (RL_Pl) und den Verlauf der jeweiligen Referenzlinien gleicher Amplituden (RL_Amp) der ausgesuchten Signalfrequenzen (SF_1...SF_X) des Druckschwingungssignals in Abhängigkeit von Referenz-Einlassventilhub-Phasendifferenz sowie Referenz-Auslassventilhub-Phasendifferenz abbilden.

6. Verfahren nach Anspruch 5, **dadurch gekennzeichnet, dass** die algebraischen Modell-Funktionen (Rf(PL), Rf(Amp)) für die ausgesuchten Signalfrequenzen (SF_1...SF_X) in einem Speicherbereich (Sp_RL/Rf) eines Motor-Steuergeräts (50) des betreffenden Serien-Verbrennungsmotors gespeichert werden.

7. Verfahren nach einem der vorausgehenden Ansprüche, **dadurch gekennzeichnet, dass** die Projektion der Linien gleicher Amplituden (211, 221) und gleicher Phasenlagen (111, 121) in eine gemeinsame, durch Einlassventilhub-Phasendifferenz (ΔEVH) und Auslassventilhub-Phasendifferenz (ΔAVH) aufgespannte Ebene und die Ermittlung des gemeinsamen Schnittpunktes (300) dieser Linien, auf der Basis algebraischer Funktionen erfolgt.

8. Verfahren nach einem der Ansprüche 1 bis 7, **dadurch gekennzeichnet, dass** das Verfahren auf einem elektronischen programmierbaren Motor-Steuergerät (50) des betreffenden Serien-Verbrennungsmotors ausgeführt wird.

9. Verfahren nach Anspruch 8, **dadurch gekennzeichnet, dass** eine Anpassung von Steuergrößen oder Steuerroutinen im Sinne einer Korrektur der oder Anpassung an die ermittelte Einlassventilhub-Phasendifferenz (ΔEVH) und die ermittelte Auslassventilhub-Phasendifferenz (ΔAVH) auf dem Motor-Steuergerät (50) vorgenommen wird.

10. Verfahren nach einem der vorangehenden Ansprüche, **dadurch gekennzeichnet, dass** die ausgesuchten Signalfrequenzen (SF_1...SF_X) die Ansaugfrequenz und weitere vielfache der Ansaugfrequenz des Verbrennungsmotors beinhalten.

11. Verfahren nach einem der vorangehenden Ansprüche, **dadurch gekennzeichnet, dass** die dynamischen Druckschwingungen im Luft-Ansaugtrakt (20) mit Hilfe eines serienmäßigen, dem Luft-Ansaugtrakt (20) zugeordneten Drucksensors (44) gemessen werden.

## Claims

1. Method for the combined identification of an inlet valve stroke phase difference (ΔEVH) and of an outlet valve stroke phase difference (ΔAVH) of a cylinder (2) of a series-production internal combustion engine during operation, wherein
- dynamic pressure oscillations, assignable to the cylinder (2), of the intake air in the intake air tract (20) of the respective series-production internal combustion engine are measured during operation, and a corresponding pressure oscillation signal is generated therefrom, and wherein a crankshaft phase angle signal is acquired at the same time,
- wherein, from the pressure oscillation signal, the phase position (PL_SF) and the amplitude (Amp_SF) of at least one respectively selected signal frequency (SF_1...SF_X) of the measured pressure oscillations in relation to the crankshaft phase angle signal are acquired using discrete Fourier transformation, **characterized by** the following further steps:
- acquiring, on the basis of the acquired phase position (PL_SF) and amplitude (Amp_SF) of the respective selected signal frequency (SF_1...SF_X), in each case a line of an equal phase (111, 121) and equal amplitude (211, 221) of the respectively same signal frequency (SF_1...SF_X), which line is dependent on an inlet valve stroke phase difference (ΔEVH) and outlet valve stroke phase difference (ΔAVH), using reference signs of the equal phase position (RL_Pl) and of the equal amplitude (RL_Amp) of the respective signal frequency SF_1...SF_X), which reference lines are stored in reference line characteristic diagrams or acquired by means of a respective algebraic model function;
- acquiring at least one respective common intersection point (300) of an acquired line of an equal phase position (111, 121) and of an acquired line of equal amplitude (211, 221) of the respective signal frequency (SF_1...SF_X) by projection into a common plane spanned by the inlet valve stroke difference (ΔEVH) and the outlet valve stroke phase difference (ΔAVH);
- determining the inlet valve stroke phase difference (ΔEVH) and the outlet valve stroke phase difference (ΔAVH) from the acquired common intersection point (300) of the line of an equal phase position (111, 121) and the line of equal amplitude (211, 221) of the respective signal frequency (SF_1...SF_X).

2. Method according to Claim 1, **characterized in that** the phase positions and the amplitudes of a plurality of selected signal frequencies (SF_1...SF_X) are acquired, and **in that** the respective lines of an equal phase position (111, 121) and equal amplitude (211, 221) of the selected signal frequencies (SF_1...SF_X) are acquired on the basis of the acquired phase positions (PL_SF) and amplitudes (Amp_SF) of the respective selected signal frequencies (SF_1...SF_X), and **in that** a plurality of common intersection points of in each case an acquired line of an equal phase position (111, 121) and an acquired line of equal amplitude (211, 221) of the selected signal frequencies are acquired, and **in that** the inlet valve stroke phase difference (ΔEVH) and the outlet valve stroke phase difference (ΔAVH) are acquired from the plurality of intersection points by forming mean values (Mw_SP).

3. Method according to Claim 1 or 2, **characterized in that**, said method comprises the following steps:
- measuring a reference internal combustion engine in order to determine reference lines of equal phase positions (RL_Pl) and equal amplitudes (RL_Amp) of selected signal frequencies (SF_1...SF_X) of the pressure oscillation signal in the air intake tract (20) as a function of the reference inlet valve stroke phase difference and reference outlet valve stroke phase difference, and
- storing the reference lines of equal phase positions (RL_Pl) and equal amplitudes (RL_Amp) of the selected signal frequencies (SF_1...SF_X) of the pressure oscillation signal in each case as a function of the reference inlet valve stroke phase difference and reference outlet valve stroke phase difference in reference line characteristic diagrams.

4. Method according to Claim 3, **characterized in that** the reference line characteristic diagrams are stored in a memory area (SP_RL/Rf) of an engine control unit (50) of the respective series-production internal combustion engine.

5. Method according to Claim 3, **characterized in that** algebraic model functions (Rf(PL), Rf(AmP)) which represent the profile of the respective reference lines of equal phase positions (RL_Pl) and the profile of the respective reference lines of equal amplitudes (RL_Amp) of the selected signal frequencies (SF_1...SF_X) of the pressure oscillation signal as a function of the reference inlet valve stroke phase difference and reference outlet valve stroke phase difference are derived from the reference line characteristic diagrams of the selected signal frequencies (SF_1...SF_X) of the pressure oscillation signal for the respective signal frequency (SF_1...SF_X) .

6. Method according to Claim 5, **characterized in that** the algebraic model functions (Rf(PL), Rf(Amp)) for the selected signal frequencies (SF_1...SF_X) are stored in a memory area (Sp_RL/Rf) of an engine control unit (50) of the respective series-production internal combustion engine.

7. Method according to one of the preceding claims, **characterized in that** the lines of equal amplitudes (211, 221) and of equal phase positions (111, 121) are projected into a common plane spanned by the inlet valve stroke phase difference (ΔEVH) and the outlet valve stroke phase difference (ΔAVH), and the common intersection point (300) of these lines is acquired on the basis of algebraic functions.

8. Method according to one of Claims 1 to 7, **characterized in that** the method is executed on an electronic, programmable engine control unit (50) of the respective series-production internal combustion engine.

9. Method according to Claim 8, **characterized in that** adaptation of control variables or control routines in the context of a correction of or adaptation to the acquired inlet valve stroke phase difference (ΔEVH) and the acquired outlet valve stroke phase difference (ΔAVH) is carried out on the engine control unit (50).

10. Method according to one of the preceding claims, **characterized in that** the selected signal frequencies (SF_1...SF_X) include the intake frequency and further multiples of the intake frequency of the internal combustion engine.

11. Method according to one of the preceding claims, **characterized in that** the dynamic pressure oscillations in the air intake tract (20) are measured using a series-production-type pressure sensor (44) assigned to the air intake tract (20) .

## Revendications

1. Procédé d'identification combinée d'une différence de phase de levée de soupape d'admission (ΔEVH) et d'une différence de phase de levée de soupape d'échappement (ΔAVH) d'un cylindre (2) d'un moteur à combustion interne de série en fonctionnement,
- les vibrations de pression dynamique, pouvant être associées au cylindre (2), de l'air d'admission dans le conduit d'admission d'air (20) du moteur à combustion interne de série concerné étant mesurées en fonctionnement et un signal de vibration de pression correspondant étant généré et un signal d'angle de phase de vilebrequin étant déterminé dans le même temps,
- la position de phase (PL_SF) et l'amplitude (Amp_SF) d'au moins une fréquence de signal sélectionnée (SF_1...SF_X) des vibrations de pression mesurées par rapport au signal d'angle de phase de vilebrequin étant déterminées à partir du signal de vibration de pression à l'aide d'une transformation de Fourier discrète (DFT), **caractérisé par** les étapes supplémentaires suivantes :
- sur la base de la position de phase déterminée (PL_SF) et de l'amplitude (Amp_SF) de la fréquence de signal sélectionnée respective (SF_1...SF_X), déterminer une ligne de la même position de phase (111, 121) et de la même amplitude (211, 221) de la même fréquence de signal (SF_1...SF_X), laquelle ligne dépend de la différence de phase de levée de soupape d'admission (ΔEVH) et de la différence de phase de levée de soupape d'échappement (ΔAVH), à l'aide de lignes de référence de la même position de phase (RL_Pl) et de la même amplitude (RL_Amp) de la fréquence de signal respective (SF_1...SF_X), lesquelles lignes sont mémorisées dans des diagrammes caractéristiques de lignes de référence ou déterminées au moyen d'une fonction de modèle algébrique respective ;
- déterminer au moins une intersection commune respective (300) d'une ligne déterminée de même position de phase (111, 121) et d'une ligne déterminée de même amplitude (211, 221) de la fréquence de signal respective (SF_1...SF_X) par projection dans un plan commun passant par la différence de phase de levée de soupape d'admission (ΔEVH) et la différence de phase de levée de soupape d'échappement (ΔAVH) ;
- déterminer la différence de phase de levée de soupape d'admission (ΔEVH) et la différence de phase de levée de soupape d'échappement (ΔAVH) à partir de l'intersection commune déterminée (300) de la ligne de même position de phase (111, 121) et de la ligne de même amplitude (211, 221) de la fréquence de signal respective (SF_1...SF_X).

2. Procédé selon la revendication 1, **caractérisé en ce que** les positions de phase et les amplitudes de plusieurs fréquences de signal sélectionnées (SF_1...SF_X) sont déterminées et **en ce que** les lignes respectives de la même position de phase (111, 121) et de la même amplitude (211, 221) des fréquences de signal sélectionnées (SF_1...SF_X) sont déterminées sur la base des positions de phase (PL_SF) et des amplitudes (Amp_SF) déterminées des fréquences de signal sélectionnées respectives (SF_1...SF_X), et **en ce que** la pluralité de points d'intersection communs d'une ligne déterminée de même position de phase (111, 121) et d'une ligne déterminée de même amplitude (211, 221) des fréquences de signal sélectionnées sont déterminés et **en ce que** la différence de phase de levée de soupape d'admission (ΔEVH) et la différence de phase de levée de soupape d'échappement (ΔAVH) sont déterminées à partir de la pluralité d'intersections par formation de moyenne (Mw_SP).

3. Procédé selon la revendication 1 ou 2, **caractérisé en ce qu'**il comprend les étapes précédentes suivantes :
- mesurer un moteur à combustion interne de référence pour déterminer des lignes de référence de mêmes positions de phase (RL_Pl) et de mêmes amplitudes (RL_Amp) des fréquences de signal sélectionnées (SF_1...SF_X) du signal de vibration de pression dans le conduit d'admission d'air (20) en fonction de la différence de phase de levée de soupape d'admission de référence et de la différence de phase de levée de soupape d'échappement de référence et
- mémoriser les lignes de référence de mêmes positions de phase (RL_Pl) et de mêmes amplitudes (RL_Amp) des fréquences de signal sélectionnées (SF_1...SF_X) du signal de vibration de pression à chaque fois en fonction de la différence de phase de levée de soupape d'entrée de référence et de la différence de phase de levée de soupape de sortie de référence dans les diagrammes caractéristiques de lignes de référence.

4. Procédé selon la revendication 3, **caractérisé en ce que** les diagrammes caractéristiques de lignes de référence sont mémorisés dans une zone mémoire (SP_RL/Rf) d'une unité de commande de moteur (50) du moteur à combustion interne de série concerné.

5. Procédé selon la revendication 3, **caractérisé en ce que** des fonctions de modèle algébriques (Rf(PL), Rf(Amp)) sont dérivées des diagrammes caractéristiques de lignes de référence des fréquences de signal sélectionnées (SF_1...SF_X) du signal de vibration de pression pour la fréquence de signal respective (SF_1...SF_X), lesquelles fonctions montrent la variation des lignes de référence respectives de mêmes positions de phase (RL_Pl) et la variation des lignes de référence respectives de mêmes amplitudes (RL_Amp) des fréquences de signal sélectionnées (SF_1...SF_X) du signal de vibration de pression en fonction de la différence de phase de levée de soupape d'entrée de référence et de la différence de phase de levée de soupape d'échappement de référence.

6. Procédé selon la revendication 5, **caractérisé en ce que** les fonctions de modèle algébriques (Rf(PL), Rf(Amp)) pour les fréquences de signal sélectionnées (SF_1...SF_X) peuvent être stockées dans une zone mémoire (Sp_RL/Rf) d'une unité de commande de moteur (50) du moteur à combustion interne de série concerné.

7. Procédé selon l'une des revendications précédentes, **caractérisé en ce que** la projection des lignes de mêmes amplitudes (211, 221) et de mêmes positions de phase (111, 121) dans un plan commun passant par la différence de phase de levée de soupape d'entrée (ΔEVH) et la différence de phase de levée de soupape de sortie (ΔAVH) et la détermination du point d'intersection commun (300) de ces lignes sont effectuées sur la base des fonctions algébriques.

8. Procédé selon l'une des revendications 1 à 7, **caractérisé en ce que** le procédé est mis en œuvre sur une unité de commande de moteur programmable électronique (50) du moteur à combustion interne de série concerné.

9. Procédé selon la revendication 8, **caractérisé en ce qu'**une adaptation des grandeurs de commande ou des routines de commande au sens d'une correction de la différence de phase de levée de soupape d'admission déterminée (ΔEVH) et de la différence de phase de levée de soupape d'échappement déterminée (ΔAVH), ou d'une adaptation à celles-ci, est effectuée sur l'unité de commande de moteur (50).

10. Procédé selon l'une des revendications précédentes, **caractérisé en ce que** les fréquences de signal sélectionnées (SF_1...SF_X) contiennent la fréquence d'admission et d'autres multiples de la fréquence d'admission du moteur à combustion interne.

11. Procédé selon l'une des revendications précédentes, **caractérisé en ce que** les vibrations de pression dynamique dans le conduit d'admission d'air (20) sont mesurées à l'aide d'un capteur de pression standard (44) associé au conduit d'admission d'air (20).
